# EUROPÄISCHE PATENTSCHRIFT

(11) **EP 0 480 187 B1**
(45) Veröffentlichungstag und Bekanntmachung des Hinweises auf die Patenterteilung: **06.12.1995**
(21) Anmeldenummer: 91115342.7
(22) Anmeldetag: 11.09.1991
(51) Int. Cl.: H04B 7/204

(54) **Kommunikationssystem, insbesondere für Kommunikationssatelliten**
Communication system, especially for communication satellites
Système de communication, en particulier pour satellites de communication

(30) Priorität: 11.10.1990 DE 4032262
(43) Veröffentlichungstag der Anmeldung: 15.04.1992
(73) Patentinhaber: ANT Nachrichtentechnik GmbH, D-71522 Backnang (DE)
(72) Erfinder: Berner, Walter, Dipl.-Ing., W-7141 Benningen (DE); Ortwein, Frank, Dipl.-Ing., W-7152 Aspach 1 (DE)

(56) Entgegenhaltungen:
- US-A- 4 858 225
- IEEE INTERNATIONAL CONFERENCE ON COMMUNICATIONS Bd. 3/3, 11. Juni 1989, BOSTON, US Seiten 1566 - 1577; R.T.GEDNEY ET AL: 'Advanced Communications Technology Satellite (ACTS)'
- IEEE INTERNATIONAL CONFERENCE ON COMMUNICATIONS Bd. 3/3, 11. Juni 1989, BOSTON ,US Seiten 1587 - 1594; M.TANAKA ET AL: 'Experimental Fixed and Mobile Multibeam Satellite Communications System'

## Beschreibung

Die Erfindung bezieht sich auf ein Kommunikationssystem, insbesondere für Kommunikationssatelliten, gemäß Oberbegriff des Anspruchs 1. Ein solches Kommunikationssystem ist aus IEEE International Conference on Communications, Advanced Communications Technology Satellite (ACTS), Seiten 1566-1577 bekannt.

Nachteilig ist bei solchen Kommunikationssytemen, daß jeder Sendestrahlenkeule eine gewisse Kapazität bzw. Datenrate zugeteilt wird. Diese Kapazität ist zumeist fix, d.h. kann nicht verändert werden. Es ist aber durchaus so, daß während einer gewissen Betriebszeit Anforderungen an gewisse Kapazitätserweiterungen bei bestimmten Strahlenkeulen gestellt werden. Man behilft sich so, daß einer Strahlenkeule mit erhöhter Kapazitätsanforderung ein Kanal mit der Datenrate beispielsweise X zugeordnet wird, muß aber in Kauf nehmen, daß einem anderen Keulenstrahl die Kapazität um eben diesen Wert X reduziert wird, da die Gesamtkapazität, für die das System ausgerichtet ist, nicht überschrittten werden kann. D.h. mit anderen Worten, die Gesamtkapazität des Kommunikationssystem wird in eine Anzahl L-Kanäle aufgeteilt, wobei diese Kanäle beispielsweise jeweils die gleiche Bandbreite bzw. gleiche Datenrate aufweisen. Um die Kapazität eines Keulenstrahls zu ändern, werden also komplette Kanäle umgeschaltet. Dazu sind je nach Flexibilität des Systems aufwendige Schaltmatritzen und Multiplexer notwendig, welche im Zwischenfrequenz- oder Radiofrequenzbereich arbeiten.

Aus der US-A-4,858,225 ist es an sich bekannt, in einem Kommunikationssystem mit Basisbandvermittlung und Mehrstrahlantenne variable Datenraten mittels "on board switching" je nach Verkehrsaufkommen zu generieren.

Der Erfindung liegt folgende Aufgabe zugrunde, ein Kommunikationssystem der eingangs genannten Art anzugeben, welches in der Lage ist, Anforderungen nach Kapazitätserweiterung oder -erniedrigung auf den einzelnen Strahlenkeulen in flexibler Weise nachzukommen unter Umgehung von oder zumindest mit deutlicher Reduzierung von aufwendigen Schaltmatritzen oder Multiplexern im Zwischenfrequenz- oder Radiofrequenzbereich.

Die Lösung erfolgt durch die kennzeichnenden Merkmale des Anspruches 1.

Vorteilhafte Ausgestaltungen ergeben sich durch die Unteransprüche.

Das erfindungsgemäße Kommunikationssystem erlaubt eine sehr flexible Handhabung unterschiedlicher Kapazitätsanforderungen an die Sendestrahlenkeulen, wobei der Aufwand relativ klein ist. Vor allem bei Verwendung digitaler Modulatoren wird der Aufwand deutlich gesenkt, und es wird eine hohe Flexibilität erreicht.

Es folgt nun die Beschreibung der Erfindung anhand der Figuren.

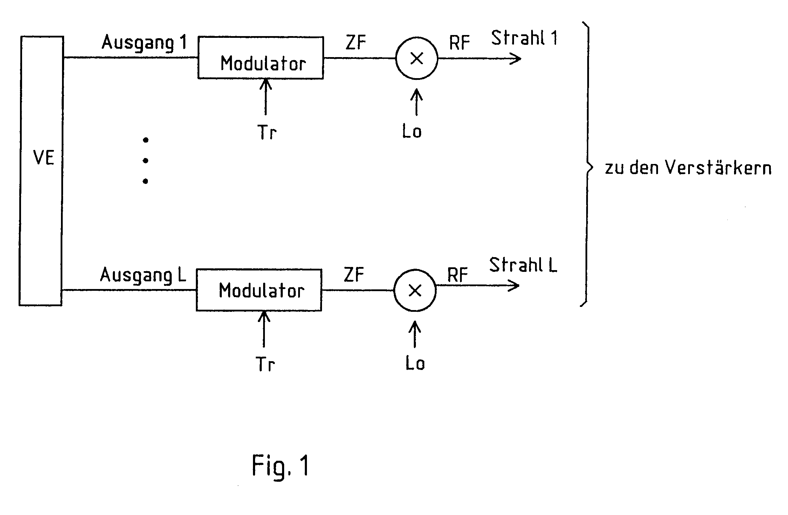

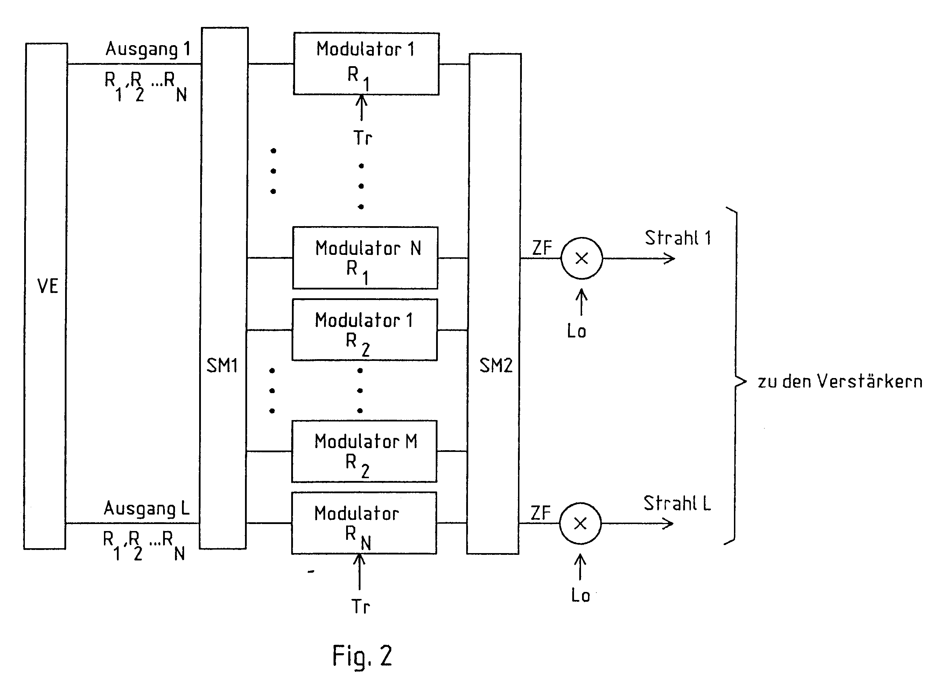

Die Figuren 1 und 2 zeigen Blockschaltbilder für Ausführungsformen des erfindungsgemäßen Kommunikationssystem.

Bei den Figuren ist gemeinsam die Vermittlungseinrichtung VE, jeweils links angeordnet, und die abgehenden Leitungen mit modulierten Datensignalen, die zu den Verstärkern führen und den einzelnen Strahlenkeulen 1 bis L zugeordnet sind, rechts angeordnet.

Die Vermittlungseinrichtung nach Figur 1 weist mehrere Datenausgänge 1 bis L auf, die zur Ausstrahlung durch die einzelnen Strahlenkeulen der Mehrstrahlsendeantenne anstehen, und die jeweils erfindungsgemäß eine variable Ausgangsdatenrate aufweisen. Diese Variabilität kann beispielsweise stufenlos oder in bestimmten Stufen erfolgen. In der Praxis dürfte die Umschaltung in Stufen von beispielsweise 8,16,32,48 und 64 Mbit/s realisiert sein. Wenn man davon absieht, daß einzelne Datenströme oder Nachrichtenströme gleichzeitig an mehreren Ausgängen anstehen und damit gleichzeitig in mehreren von den einzelnen Strahlenkeulen beleuchteten Gebietszonen empfangen werden können, so geht eine Erhöhung der Datenrate an einem oder mehreren Ausgängen mit einer entsprechenden Verringerung der Datenrate an einem oder mehreren anderen Ausgängen einher, damit der Gesamtdurchsatz der Vermittlungseinrichtung an Daten konstant bleibt. Die Ausgangsdaten der Vermittlungseinrichtung werden anschließend jeweils einem Modulator zugeführt, dessen Modulationsdatenrate variabel ist und der Datenrate des betreffenden Ausgangs angepaßt wird. Am Eingang und oder am Ausgang jedes Modulators sind abstimmbare Filter eingefügt, deren Charakteristik ebenfalls der jeweiligen Datenrate anzupassen ist. Die abstimmbaren Filter sind in Figur 1 nicht gezeichnet.

Je nach verfügbarer Technologie ist die Ausgangsfrequenz der Modulatoren im Zwischenfrequenzbereich oder eventuell auch die Sendefrequenz. Ist das Letztere der Fall, so ist bei einer Änderung der Datenrate auch eine Änderung der Trägerfrequenz durchzuführen, so daß mit dem gesendeten Spektrum nicht die Grenzen des für den Satelliten verfügbaren Bandes verletzt werden.

Ist die Ausgangsfrequenz des Modulators im Zwischenfrequenzbereich, wie in Figur 1 gezeichnet, so muß in entsprechender Weise dem nachfolgenden Aufwärtsmischer eine variable Lokaloszillator Trägerfrequenz zugeführt werden.

Bei Einsatz der gegenwärtig zur Verfügung stehenden Halbleitertechnik bieten sich für Datenraten bis etwa 20 Mbit/s für den Modulator vorteilhafterweise vollständig digitalisierte Lösungen an. Bei höheren Datenraten müssen aus heutiger Sicht analoge Modulatoren verwendet werden.

Im Gegensatz zu der Ausführungsform nach Figur 1 weisen die Ausgänge 1 bis L der Vermittlungseinrichtung nach Figur 2 nicht stufenlos variable Datenraten, sondern in bestimmten Stufen einstellbare Datenraten auf. Ihnen könnte man nun nach Figur 1 ebenfalls die gleiche Anzahl von L-Modulatoren jeweils fest zuordnen, wobei ihre Modulationsdatenraten variabel entsprechend angepaßt und eingestellt werden müssen. Auch eine andere Variante wäre denkbar, nämlich die Modulationsdatenraten dieser nachfolgenden Modulatoren ebenfalls stufenweise einstellbar zu gestalten in entsprechender Weise wie die Ausgänge der Vermittlungseinrichtung.

Beide Lösungen sind in Figur 2 nicht gezeichnet, vielmehr sind eine Anzahl N Modulatoren mit der Modulationsdatenrate R1, eine Anzahl M Modulatoren mit der Datenrate R2 usw. und ein Modulator mit der Modulationsdatenrate Rₙ vorgesehen, welche mittels einer Schaltmatrix SM 1 auf die Ausgänge mit der entsprechenden Datenrate aufgeschaltet werden können. Mittels einer weiteren Schaltmatrix SM 2 sind die Modulatorausgänge in entsprechend vorgegebener Weise auf die Signalzweige zu den einzelnen Strahlenkeulen der Mehrstrahlantenne schaltbar.

Die Realisierung mit Modulatoren mit fester aber unterschiedlicher Datenrate, die entsprechend geschaltet werden, gemäß Figur 2 bietet sich für höherratige Systeme an, für welche noch keine digitale Modulatoren verfügbar sind.

In entsprechender Weise wie bei dem Blockschaltbild nach Figur 1 sind unter Umständen vor und oder hinter den Schaltmatrizen SM 1 und SM 2 abstimmbare Filter einzufügen, deren Charakteristik der jeweiligen Datenrate anzupassen ist. Die Filter können aber auch im Signalzweig zwischen Schaltmatrix SM 1 und Schaltmatrix SM 2 vor und oder hinter den Einzelmodulatoren, entsprechend angepaßt an die jeweiligen Datenrate des betreffenden Modulators fest voreingestellt installiert sein.

## Patentansprüche

1. Kommunikationssystem, insbesondere für Kommunikationssatelliten mit Basisbandvermittlung und Mehrstrahlantenne, mit veränderbarer Zuteilung von Übertragungskapazität auf die einzelnen Sendestrahlenkeulen (1...L), wobei die einzelnen Basisband-Ausgangssignale entsprechend ihrer aktuellen Datenrate mit Modulatoren der entsprechenden Modulationsdatenraten kombiniert und mittels dieser Modulatoren auf jeweils eine Trägerfrequenz moduliert sind und wobei die Basisband-Ausgangssignale mittels der Modulatoren in ein Zwischenfrequenzband (ZF) umsetzbar sind, dadurch gekennzeichnet, daß die in den einzelnen Sendestrahlenkeulen zugeordneten Basisband-Ausgangssignale einer Vermittlungseinrichtung (VE) eine variable Datenrate aufweisen und daß zur Umsetzung der Signale vom Zwischenfrequenzband (ZF) in den Radiofrequenzbereich (RF) Mischer vorgesehen sind, denen Träger (Lo) mit variabel einstellbarer Frequenz zuführbar sind.

2. Kommunikationssystem nach Anspruch 1, dadurch gekennzeichnet, daß die Datenrate der Basisband-Ausgangssignale einstellbar oder umschaltbar ist auf eine Anzahl fest vorgegebener Werte (R₁, R₂...R_{N}).

3. Kommunikationssystem nach Anspruch 1 oder 2, dadurch gekennzeichnet, daß jedem Basisbandausgang ein Modulator fest zugeordnet ist, dessen Modulationsdatenrate variabel ist und jeweils an diejenige des betreffenden Basisbandausgangs angepaßt ist.

4. Kommunikationssystem nach Anspruch 2, dadurch gekennzeichnet, daß für jeden vorgegebenen Wert der Datenrate eine Anzahl Modulatoren mit entsprechender Modulationsrate vorgesehen ist.

5. Kommunikationssystem nach Anspruch 4, dadurch gekennzeichnet, daß die Modulatoren mittels Schalter oder einer Schaltmatrix (SM1) an die Basisbandausgänge, welche die gleichen Datenraten aufweisen, anschaltbar sind.

6. Kommunikationssystem nach Anspruch 5, dadurch gekennzeichnet, daß weitere Schalter oder eine weitere Schaltmatrix (SM2) vorgesehen sind, mittels der die Modulatoren den einzelnen Sendestrahlenkeulen (1...L) zuordenbar oder an diese anschaltbar sind.

7. Kommunikationssystem nach einem der vorhergehenden Ansprüche, dadurch gekennzeichnet, daß zur Pulsformung der Basisbandausgangssignale Filter vorgesehen sind, deren Charakteristik entsprechend der aktuellen Datenrate einstellbar ist.

8. Kommunikationssystem nach einem der vorhergehenden Ansprüche, dadurch gekennzeichnet, daß die Ausgangsleistung der Modulatoren proportional zur Datenrate einstellbar ist.

## Claims

1. Communication system, in particular for communication satellites with baseband switching and multibeam antenna, having variable allocation of transmission capacity to the individual transmit beam lobes (1...L), the individual baseband output signals being combined in accordance with their current data rate with modulators of the corresponding modulation data rates and being modulated by means of these modulators onto respectively one carrier frequency, and it being possible for the baseband output signals to be converted into an intermediate frequency band (ZF) by means of the modulators, characterized in that the baseband output signals of a switching device (VE) which are assigned in the individual transmit beam lobes have a variable data rate, and in that in order to convert the signals of the intermediate frequency band (ZF) into the radio-frequency range (RF), mixers are provided to which carriers (Lo) with a variably settable frequency can be fed.

2. Communication system according to Claim 1, characterized in that the data rate of the baseband output signals can be set or switched over to a number of permanently prescribed values (R₁, R₂ ... R_{N}).

3. Communication system according to Claim 1 or 2, characterized in that each baseband output is permanently assigned a modulator whose modulation data rate is variable and is respectively matched to that of the relevant baseband output.

4. Communication system according to Claim 2, characterized in that a number of modulators with a corresponding modulation rate are provided for each prescribed value of the data rate.

5. Communication system according to Claim 4, characterized in that the modulators can be connected by means of switches or a switching matrix (SM1) to the baseband outputs which have the same data rates.

6. Communication system according to Claim 5, characterized in that further switches or a further switching matrix (SM2) are provided by means of which the modulators can be assigned to the individual transmit beam lobes (1...L) or can be connected to the latter.

7. Communication system according to one of the preceding claims, characterized in that filters whose characteristic can be set in accordance with the current data rate are provided for pulse shaping of the baseband output signals.

8. Communication system according to one of the preceding claims, characterized in that the output power of the modulators can be set in a manner proportional to the data rate.

## Revendications

1. Système de communication, notamment pour des satellites de communication avec transmission par bande de base et antenne à faisceaux multiples, et attribution variable de la capacité de transmission aux différents lobes d'émission (1...L), les différents signaux de sortie de bande de base étant combinés selon leur débit de données, instantané au modulateur ayant les débits de données de modulations correspondants et ces modulateurs en assurent la modulation avec une fréquence porteuse et les signaux de sortie de bande de base sont convertis par les modulateurs dans une bande de fréquence intermédiaire (ZF), caractérisé en ce que les signaux de sortie de bande de base associés aux différents lobes d'émission d'une installation de transmission (VE) correspondent à un débit de données variable et pour convertir les signaux de la bande de fréquence intermédiaire (ZF) dans la plage des fréquences radio (RF), il y a des mélangeurs recevant une porteuse (LO) de fréquence variable, réglable.

2. Système de communication selon la revendication 1, caractérisé en ce que les débits de données des signaux de sortie de bande de base sont réglables ou peuvent être commutés sur un certain nombre de valeurs fixes prédéterminées (R₁, R₂...R_{N}).

3. Système de communication selon la revendication 1 ou 2, caractérisé en ce qu'à chaque sortie de bande de base est associé un modulateur dont le débit de données de modulation est variable et est chaque fois adapté à la sortie de bande de base correspondante.

4. Système de communication selon la revendication 2, caractérisé en ce que pour chaque valeur prédéterminée des débits de données il est prévu un nombre de modulateurs présentant des débits de modulation correspondants.

5. Système de communication selon la revendication 4, caractérisé en ce que les modulateurs peuvent être commutés par des commutateurs ou une matrice de commutation (SM1) sur les sorties de bande de base ayant les mêmes débits de données.

6. Système de communication selon la revendication 5, caractérisé par d'autres commutateurs ou une autre matrice de commutation (SM2) à l'aide de laquelle les modulateurs sont associés aux différents lobes d'émission (1...L) ou peuvent être commutés sur ceux-ci.

7. Système de communication selon l'une des revendications précédentes, caractérisé en ce que pour la mise en forme des impulsions des signaux de sortie de bande de base il y a des filtres dont la caractéristique est réglable en fonction du débit de données instantané.

8. Système de communication selon l'une des revendications précédentes, caractérisé en ce que la puissance de sortie des modulateurs est réglable proportionnellement au débit des données.
